# EUROPÄISCHE PATENTANMELDUNG

(11) **EP 0 584 689 A2**
(43) Veröffentlichungstag der Anmeldung: **02.03.1994**
(21) Anmeldenummer: 93113109.8
(22) Anmeldetag: 16.08.1993
(51) Int. Cl.: B60T 13/52

(54) **Bremskraftverstärker**

(30) Priorität: 26.08.1992 DE 4228277
(71) Anmelder: LUCAS INDUSTRIES PUBLIC LIMITED COMPANY, Solihull, West Midlands B91 3TX (GB)
(72) Erfinder: Schlüter, Peter, D-56206 Kammerforst (DE)
(74) Vertreter: von Hellfeld, Axel, Dr. Dipl.-Phys.

(57) **Zusammenfassung**

Ein Bremskraftverstärker für eine Fahrzeugbremsanlage weist einen zwei Kammern aufweisenden Vakuumverstärker auf, dessen Unterdruckkammer (12) bei bremskraftverstärkender Betätigung evakuiert ist, während in der Überdruckkammer (14) mittels eines Steuerventils (28) ein höherer Druck als in der Unterdruckkammer einstellbar ist, wobei der höhere Druck über den äußeren Atmosphärendruck hinausgeht. Hierzu dient ein mechanisches Regelventil (12), das vor das Steuerventil (28) geschaltet ist. Bei der Verbindung einer Druckquelle (18) mit der Überdruckkammer (14) öffnet ein Ventilsitz, der den Zugang von der Druckquelle (18) zum Ventil steuert, bevor ein anderer Ventilsitz schließt, der die Verbindung von einem Eingang (24) des Ventils zur Überdruckkammer (14) steuert.

## Beschreibung

Die Erfindung betrifft einen Bremskraftverstärker für eine Fahrzeugbremsanlage mit einem zwei Kammern aufweisenden Vakuumverstärker, dessen Unterdruckkammer bei bremskraftverstärkender Betätigung evakuiert ist, während in der Überdruckkammer mittels eines Steuerventils ein höherer Druck als in der Unterdruckkammer einstellbar ist, wobei der höhere Druck zumindest dem äußeren Atmosphärendruck entspricht.

Solche Bremskraftverstärker sind dem Fachmann allgemein bekannt (vgl. z.B. DE-GM 92 02 154.9).

Bei bekannten Bremskraftverstärkern unter Anwendung von Vakuum wird üblicherweise die Unterdruckkammer auf einen Wert von z.B. 0,2 bar evakuiert, während in der Überdruckkammer, je nach gewünschter Verstärkungswirkung, Drucke zwischen 0,2 bar und 1 bar eingestellt werden. Somit entspricht die mit einem herkömmlichen Bremskraftverstärker dieser Art erzielbare Verstärkung einer Druckdifferenz von etwa 0,8 bar.

Bei Kraftfahrzeugen steht häufig nicht nur eine Vakuumquelle zur Verfügung, sondern es kann auch in einfacher Weise eine Quelle für Luft bereitgestellt werden, deren Druck größer ist als der Druck der äußeren Atmosphäre (nachfolgend kurz "Atmosphärendruck" genannt).

Aus der JP 59-134 047 A (Patents Abstracts of Japan, Section M, Vol. 8, 1984, No. 262 (11-341)) ist ein Bremskraftverstärker mit den Merkmalen des Oberbegriffs des Patentanspruchs bekannt. Dort erfolgt jedoch die Umschaltung des Betriebs des Bremskraftverstärkers in einen Zustand, in dem Druck in die Überdruckkammer des Bremskraftverstärkers eingespeist wird, die einen höheren Druck hat als Atmosphärendruck, mit Verlusten bezüglich der Druckluft. Beim Umschalten geht also Luft aus der Druckquelle verloren. Beim zitierten Stand der Technik gemäß der JP 59-134 047 ist dieser Druckluftverlust deshalb unvermeidbar, weil ein Schieberventil vorgesehen ist, welches aus Sicherheits- und Funktionsgründen beim Umschalten eine Zwischenposition einnehmen muß, in der die Druckluftquelle und der zur äußeren Atmosphäre führende Eingang des Ventils zeitweise miteinander verbunden sind.

Auch die EP 0 368 691 A1 beschreibt einen Bremskraftverstärker, bei dem eine Druckquelle verwendet wird, mit der Luft in den Verstärker einspeisbar ist, die einen höheren Druck hat als die äußere Atmosphäre. Bei diesem Stand der Technik wird jedoch die Zufuhr von Druckluft völlig separat gesteuert, d.h. unabhängig von der Einspeisung von Luft in die Überdruckkammer des Bremskraftverstärkers bei Drücken unterhalb dem Atmosphärendruck. Weiterhin besitzt dieser Stand der Technik den Nachteil, daß nur ein begrenzter Ringabschnitt (Faltenbalg) von der Druckluft beaufschlagt wird, wodurch der Bremskraftverstärker insgesamt eine relativ große Baugröße aufweist.

Die Erfindung setzt sich das Ziel, einen Bremskraftverstärker, der die Merkmale des Oberbegriffs des Patentanspruchs aufweist, so auszugestalten, daß bei hoher Funktionszuverlässigkeit, einfachem Aufbau und geringer Baugröße gewährleistet ist, daß die Luft aus der Druckquelle möglichst verlustfrei verwendet wird.

Eine erfindungsgemäße Lösung dieser Aufgabe ist im Patentanspruch gekennzeichnet.

Das erfindungsgemäß vorgesehene rein mechanisch wirkende Ventil (nachfolgend als "Regelventil" bezeichnet) verwendet somit den Druck in der Überdruckkammer des Vakuumverstärkers als Steuergröße für seine Selbst-Steuerung, wobei die Steuerung durch Vergleich des momentanen Druckes in der Überdruckkammer des Vakuumverstärkers mit dem Druck in der äußeren Atmosphäre (Atmosphärendruck) durchgeführt wird. Entsprechend dieser Steuerung (Öffnung und Schließung) des Ventils wird dann Überdruck (also ein Druck, der größer ist als der äußere Atmosphärendruck) in die Überdruckkammer des Vakuumverstärkers eingeleitet, wenn in der Überdruckkammer Atmosphärendruck erreicht ist. Damit läßt sich "nahtlos", d.h. ohne sprunghafte Änderungen ein kontinuierlicher Übergang von einer herkömmlichen Beaufschlagung eines Vakuumverstärkers mit Vakuum einerseits und einem Druck bis zum Atmosphärendruck andererseits erweitern auf die Anwendung einer Druckquelle, die Luft unter Überdruck (d.h. einem Druck der größer ist als der Atmosphärendruck) bereitstellt.

Mit der Erfindung wird bevorzugt ein herkömmlicher Vakuumverstärker eingesetzt, der hier als bekannt vorausgesetzt wird.

Nachfolgend wird ein Ausführungsbeispiel der Erfindung anhand der Zeichnung näher beschrieben. Es zeigt:
- Fig.1: schematisch einen Vakuumverstärker mit einem zusätzlich vorgesehenen Regelventil zum Anschließen einer Druckquelle, und
- Fig.2 - 4: das Regelventil im Detail in verschiedenen Betriebsstellungen.

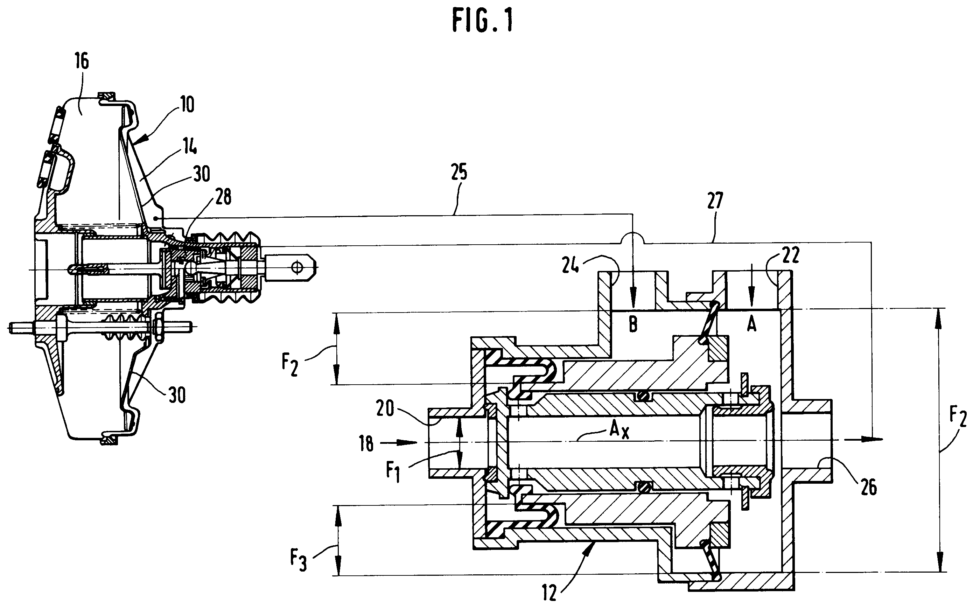

Fig.1 zeigt einen herkömmlichen Bremskraftverstärker 10 (vgl. z.B. DE-GM 92 02 154.9), mit einer Überdruckkammer 14 und einer Unterdruckkammer 16. In der Unterdruckkammer 16 wird in herkömmlicher Weise ein Unterdruck erzeugt, der typischerweise etwa 0,2 bar betragen kann.

Weiterhin zeigt Fig.1 ein Ventil 12, das an den Vakuumverstärker 10 angeschlossen ist, um wahlweise eine Druckquelle 18 mit der Überdruckkammer 14 des Vakuumverstärkers 10 verbinden zu können. Die Druckquelle 18 ist in Fig.1 schematisch mit einem Pfeil angedeutet. Unter einer Druckquelle 18 in diesem Sinne ist eine Quelle zu verstehen, die Luft erzeugt, deren Druck größer ist als der Druck der äußeren Atmosphäre (Atmosphärendruck), z.B. Luft mit einem Druck von 1,2 bis 1,3 bar.

Das Regelventil 12 ist mit vier Anschlüssen versehen:
Über einen Eingang 20 kann unter Überdruck stehende Luft von der Druckquelle 18 in das Ventil eingelassen werden (bei entsprechender Ventilstellung), über einen Eingang 22 wird Luft in einen Raum A des Ventils eingelassen, die den Druck der äußeren Atmosphäre aufweist (der Eingang 22 ist also mit der äußeren Atmosphäre verbunden), über einen Eingang 24 wird das Ventil 12 mit der Überdruckkammer 14 des Vakuumverstärkers 10 verbunden, so daß in einem Raum B, der mit dem Eingang 24 verbunden ist, Luft ansteht, die den gleichen Druck aufweist wie die Luft in der Überdruckkammer 14, und ein Auslaß 26 des Ventils 12 ist über eine Leitung 27 mit einem als solches bekannten Steuerventil 28 des Vakuumverstärkers 10 verbunden. Das Steuerventil 28 wird üblicherweise bei Bremsbetätigung so gesteuert, daß sukzessive, je nach Grad der Bremskraftverstärkung, mehr oder weniger Luft in die Überdruckkammer 14 des Vakuumverstärkers 10 eingelassen wird. Das Steuerventil 28 ist Stand der Technik und wird hier somit nicht näher beschrieben. Auch zum Stand der Technik gehört der Arbeitskolben 30 des Vakuumverstärkers 10, der in Fig.1 mit zunehmenden Druck in der Überdruckkammer 14 nach links verschoben wird, um in bekannter Weise die Bremskraft zu verstärken.

Wenn das in der Fahrzeugbremsanlage erzeugbare Vakuum z.B. 0,2 bar beträgt, dann wird mittels des Steuerventils 28 der Luftdruck in der Überdruckkammer 14 zwischen 0,2 und 1 bar (Atmosphärendruck) eingestellt. Die herkömmliche Anordnung würde dann keine weitere Druckerhöhung in der Überdruckkammer 14 mehr ermöglichen, so daß die maximale Bremskraftverstärkung einer Druckdifferenz von etwa 0,8 bar entspräche.

Bei der in Fig.1 gezeigten Anordnung unter Verwendung einer Druckquelle 18, die höheren als Atmosphärendruck erzeugt, wird bei Erreichen von Atmosphärendruck in der Überdruckkammer 14 die unter höherem Druck stehende Luft aus der Druckquelle 18 über das Ventil 12 in die Leitung 27 eingegeben, um in der Überdruckkammer 14 höhere Drucke als Atmosphärendruck zu erzeugen und um so den Bereich der Bremskraftverstärkung zu erweitern. Dieser Übergang des Systems unter Einschluß der Druckquelle 18 soll möglichst kontinuierlich und ohne sprunghafte Erscheinungen durchgeführt werden.

Hierzu dient das Regelventil 12.

Das Regelventil 12 ist funktionsmäßig vor dem Steuerventil 28 des Vakuumverstärkers 10 angeordnet, d.h. alle dem Vakuumverstärker 10 zugeführte Luft, also sowohl Luft aus der äußeren Atmosphäre im "Normalbereich" der Bremskraftverstärkung als auch Luft aus der Druckquelle 18, wird über das Regelventil 12 zum Vakuumverstärker 10 geführt. Dies bedeutet, daß das Steuerventil 28 des Bremskraftverstärkers 10 über den gesamten Druckbereich, der in seiner Überdruckkammer 14 einstellbar ist (hier also z.B. 0,2 bar bis 1,3 bar), eine Kraft/Weg-Steuerfunktion ausführt, wobei erfindungsgemäß der Druckbereich über 1 bar hinaus kontinuierlich (ohne sprunghafte Änderungen) erweitert ist.

Bei Einsatz des Regelventils 12 mit einer zusätzlichen Druckquelle 18 müssen nur die Eingänge bzw. Ausgänge 20, 22, 24 und 26 angeschlossen werden. Somit kann das Regelventil 12 sowohl außerhalb und entfernt eines Bremskraftverstärkers 10 angeordnet werden als auch in den Bremskraftverstärker integriert werden.

Das Regelventil 12 weist ein Gehäuse 32 auf sowie einen inneren Regelkolben 34 und einen äußeren Regelkolben 36. Der innere und der äußere Regelkolben sind jeweils in bezug auf die Längsachse Ax des Ventils 12 verschiebbar gelagert.

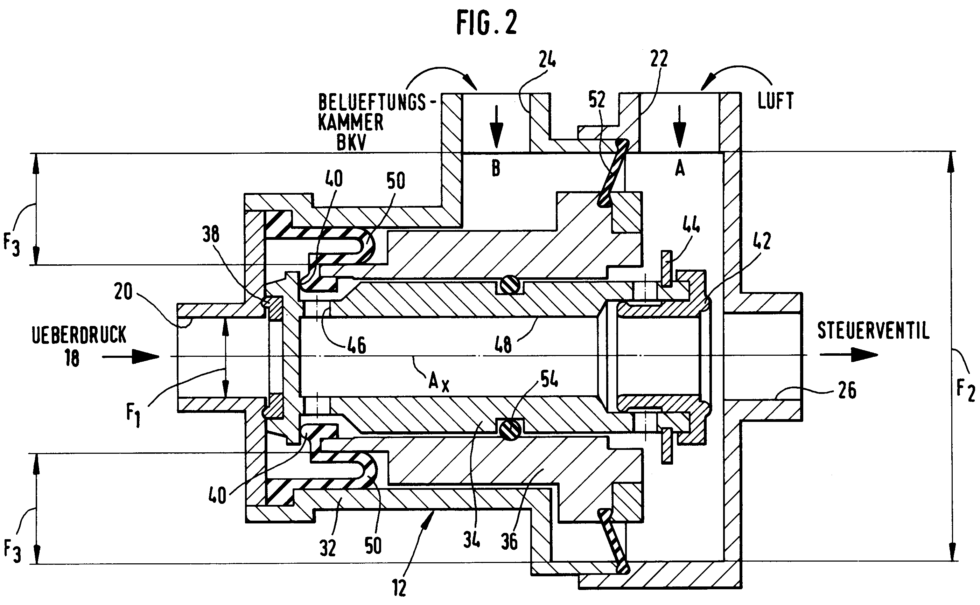

Gemäß den Fig.2 bis 4 weist der innere Regelkolben 34 auf der linken Seite einen Ventilsitz 38 und auf der rechten Seite einen Ventilsitz 42 auf. Der äußere Regelkolben 36 weist auf der linken Seite einen Ventilsitz 40 auf, der mit einem zugeordneten Anschlag auf dem inneren Regelkolben 34 in Eingriff bringbar ist.

Weiterhin ist mit dem inneren Regelkolben 34 ein Anschlag 44 fest verbunden, der mit dem äußeren Regelkolben 36 in Eingriff bringbar ist.

Eine Querbohrung 46 verbindet eine Axialbohrung 48 im inneren Regelkolben 34 mit dem Raum außerhalb des inneren Regelkolbens 34.

Der äußere Regelkolben 36 gleitet axial abgedichtet (Dichtung 54) auf dem inneren Regelkolben 34 und ist dabei an seinen beiden Enden durch biegsame Manschetten 50 bzw. 52 mit dem äußeren Gehäuse 32 verbunden.

Die **Funktion** des Regelventils 12 ist wie folgt:
Fig.2 zeigt den Ausgangszustand des aus dem Bremskraftverstärker 10 und dem Regelventil 12 gemäß Fig.1 bestehenden Systems, in dem das Bremspedal nicht betätigt ist. Der Eingang 20, an dem Überdruck der Druckquelle 18 ansteht, ist mittels des Ventilsitzes 38 geschlossen. Der Eingang 24, der an die Überdruckkammer 14 des Vakuumverstärkers 10 angeschlossen ist, ist in diesem Betriebszustand evakuiert (weil auch die Überdruckkammer evakuiert ist) und am Eingang 22 steht Luft unter Atmosphärendruck an. Da der Ventilsitz 42 gemäß Fig.2 geöffnet ist, gelangt der Atmosphärendruck über den Eingang 22 und den Ausgang 26 sowie die Leitung 27 zum Steuerventil 28 und liegt dort an, ohne in die Überdruckkammer 14 gelangen zu können, da in diesem Betriebszustand das Steuerventil 28 noch nicht betätigt (geöffnet) ist.

Im Raum A des Ventils 12 liegt somit Atmosphärendruck an und im Raum B des Ventils 12 herrscht der gleiche Druck wie in der Überdruckkammer 14 des Vakuumverstärkers 10, letzterer ist bei funktionierender Anlage ein Unterdruck (z.B. 0,2 bar). Die aufgrund der unterschiedlichen anstehenden Drucke im Ventil wirksamen Flächen sind in Fig.2 mit F₁, F₂ und F₃ bezeichnet. Die in diesem Betriebszustand wirksamen Drucke erzeugen entsprechend den Wirkflächen F₂ und F₃ eine Schließkraft an den Regelkolben des Ventils derart, daß der Druck der Druckquelle 18 nicht über den Eingang 20 hinaus fortgepflanzt wird. Das Ventil ist also in Richtung nach links gegen die der Wirkfläche F₁ entsprechende Kraft der Druckquelle 18 geschlossen.

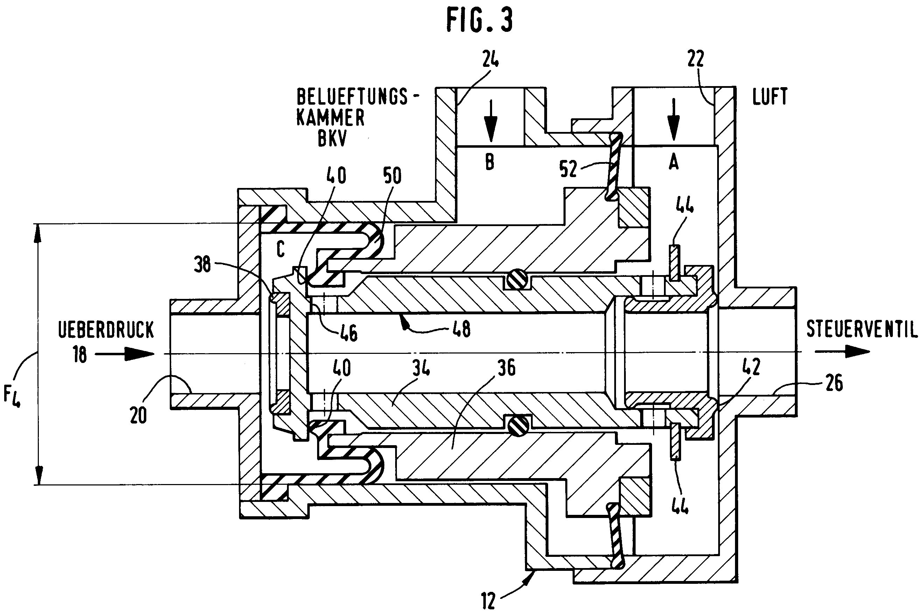

Es sei nun ein anderer Betriebszustand angenommen, bei dem das Bremspedal betätigt wird. Dieser Betriebszustand wird anhand der Fig.3 erläutert.

Wird das Bremspedal betätigt, so strömt über das Steuerventil 28 des Vakuumverstärkers 10 und die offene Verbindung zwischen dem Eingang 22 und dem Ausgang 26 sowie die Leitung 27 unter Atmosphärendruck stehende Luft in die zuvor evakuierte Überdruckkammer 14 des Vakuumverstärkers 10. Je mehr nun die Überdruckkammer 14 belüftet wird, um so geringer wird der Unterdruck im Bereich B des Ventils 12 im Verhältnis zum Atmosphärendruck im Bereich A.

Im Regelventil 12 entsteht nun eine Änderung der Druckverhältnisse, wodurch die Schließkraft, welche den Sperrzustand am Eingang 20 für Druckluft aufrechterhält, kontinuierlich reduziert wird. Steigt nun der Druck in der Überdruckkammer 14 weiter in Richtung auf Atmosphärendruck an, so werden die Druckverhältnisse allmählich soweit geändert, daß die unter Überdruck stehende Luft der Druckquelle 18 am Eingang 20 den Zugang zum Ventil öffnen kann.

Nun stellt sich im Ventil 12 der in Fig.3 gezeigte Zustand ein. Die Druckverhältnisse an den Wirkflächen F₂ und F₃ haben sich nun derart verändert, daß die Druckluft über ihre Wirkfläche F₁ den Ventilsitz 38 öffnet. Die unter höherem als Atmosphärendruck stehende Luft der Druckquelle 18 kann nun in den Raum C (in der Manschette 50) strömen, womit sich die Kraftwirkung der Druckluft in Axialrichtung durch die stark vergrößerte Wirkfläche F₄ schnell soweit erhöht, daß der äußere und der innere Regelkolben 34, 36 axial soweit verschoben werden, bis der innere Regelkolben 34 durch Schließen des Ventilsitzes 42 seine in den Figuren rechts gezeichnete axiale Endlage erreicht hat.

Hat der innere Regelkolben 34 diese Endlage gemäß Fig.3 erreicht und ist somit der Ventilsitz 42 geschlossen, bewirkt der weiterhin anstehende Druck der Druckquelle 18 ein Abheben (Öffnung) des Ventilsitzes 40. Diese Öffnung des Ventilsitzes 40 bedeutet, daß die gemeinsame Bewegung der Regelkolben aufhört und sich der äußere Regelkolben 36 in bezug auf den inneren Regelkolben 34 weiter nach rechts bewegt und dort eine Endlage erreicht, die durch den Anschlag 44 des inneren Regelkolbens 34 definiert ist.

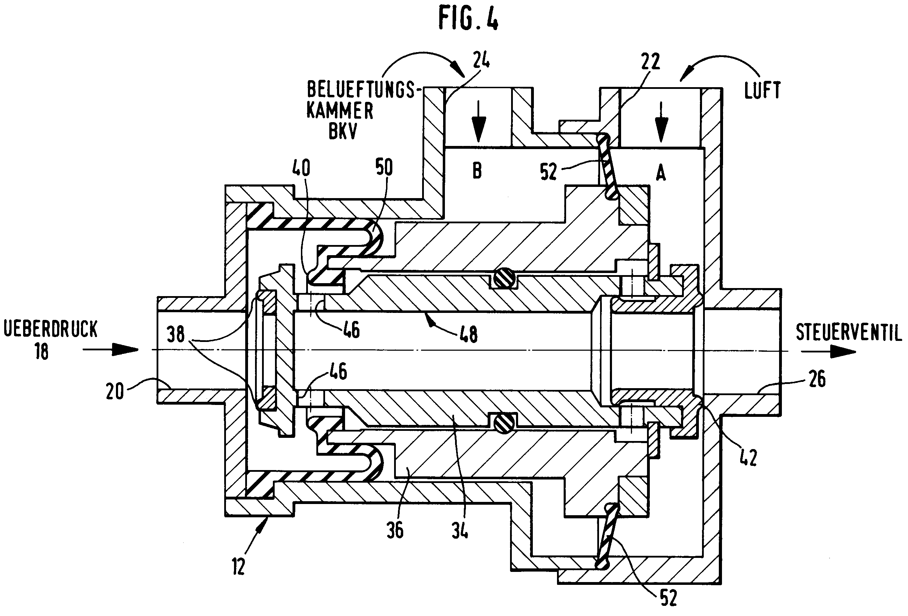

Dieser Betriebszustand ist in Fig.4 dargestellt. Die Druckluft der Druckquelle 18 kann somit über den Eingang 20, den geöffneten Ventilsitz 38, den geöffneten Ventilsitz 40, die Querbohrung 46 im inneren Regelkolben 34 und die Axialbohrung 48 im inneren Regelkolben 34 zum Ausgang 26 und somit über die Leitung 27 und das Steuerventil 28 in die Überdruckkammer 14 des Vakuumverstärkers 10 gelangen. Dabei wird der Einlaß von Luft unter Überdruck (größer als 1 bar) in die Überdruckkammer 14 weiterhin durch das Steuerventil 28 gesteuert.

Somit ist der Bereich wirksamer Druckdifferenzen zwischen den Kammern 14, 16 des Vakuumverstärkers kontinuierlich bis zu Druckdifferenzen erweitert worden, die durch den Maximaldruck der Druckquelle 18 bestimmt sind.

Wird nun vom Fahrer das Bremspedal freigegeben, so wird die Überdruckkammer 14 des Vakuumverstärkers 10 über das Steuerventil 28 mit der Vakuumquelle verbunden und verliert somit kontinuierlich immer mehr an Druck. Entsprechend verschieben sich dann auch wieder die durch die Wirkflächen F₁ bis F₄ definierten Kraftverhältnisse im Regelventil 12, wodurch das Ventil die oben erläuterten Betriebsstellungen in umgekehrter Reihenfolge nacheinander durchläuft.

Das vorstehend beschriebene rein mechanisch wirksame Ventilsystem hat neben seinem kompakten Aufbau auch insbesondere bei Ausfallbedingungen erhebliche Vorteile. Fällt z.B. die Vakuumquelle (am Einlaß 24) aus, so schaltet das Regelventil 12 automatisch auf eine reine Druckluftversorgung über den Einlaß 20 um. Dadurch steht dem Fahrzeug immerhin noch die Druckdifferenz zwischen dem Überdruck der Druckquelle 18 und dem äußeren Atmosphärendruck (z.B. 0,3 bar) zur Bremskraftverstärkung zur Verfügung.

Auch bei Ausfall der Druckquelle 18 am Eingang 20 bedeutet dies keinen Zusammenbruch der Bremskraftverstärkung. Vielmehr steht dann ohne Störung weiterhin die "normale" Druckdifferenz zwischen der Vakuumquelle und dem Atmosphärendruck zu Verfügung.

Ein besonderer Vorteil ergibt sich dadurch, daß, wie beschrieben, das Regelventil 12 vor dem herkömmlichen Steuerventil 28 angeordnet ist, da hierdurch das Steuerventil seine Steuerfunktion auch im durch die Druckquelle 18 gegebenen Überdruckbereich ausführen kann.

Ein weiterer besonderer Vorteil des oben beschriebenen Bremskraftverstärkers und seiner Ventilsteuerung besteht darin, daß Leckverluste bezüglich der Druckquelle 18 weitestgehend vermieden sind, d.h. die von der Druckquelle 18 bereitgestellte, unter Überdruck stehende Luft (deren Druck höher ist als der äußere Atmosphärendruck) wird höchst sparsam verwendet, wodurch relativ kleine Speichervolumina erreicht sind.

Die Leckverluste werden mit dem oben beschriebenen Ventil 12 wie folgt vermieden: Liegt am Eingang 24 Vakuum an (weil in der Überdruckkammer 14 noch ein Druck herrscht, der geringer ist als der Atmosphärendruck), so ist der Ventilsitz 38 geschlossen. Füllt sich dann die Überdruckkammer 14 des Bremskraftverstärkers 10 allmählich mit Luft, so beginnt bei Erreichen eines bestimmten Füllzustandes der Ventilsitz 38 abzuheben, d.h. er öffnet. Dieses Abheben des Ventilsitzes 38 beginnt vor dem Verschließen des Ventilsitzes 42, der die Verbindung zwischen dem Atmosphäreneingang 22 des Ventils und der Überdruckkammer 14 steuert. Wichtig ist hierbei, daß zu diesem Zeitpunkt der Ventilsitz 40, welcher eine Verbindung von der Druckquelle 18 zur Überdruckkammer 14 steuert, noch geschlossen ist. Das Ventil 12 ist so ausgelegt, daß der Ventilsitz 40 erst nach dem Schließen des Ventilsitzes 42 öffnet. Durch die schlagartige Vergrößerung der Wirkflächen nach dem Öffnen des Ventilsitzes 38 wird eine Art "Kettenreaktion" mit hoher Geschwindigkeit eingeleitet, durch welche der Eingang 22 sofort geschlossen und der Ventilsitz 40 zur Druckquelle 18 sofort geöffnet wird.

Aufgrund der auf diese Weise erreichten Vermeidung von Leckverlusten, ist die Funktionskennlinie des Bremskraftverstärkers immer die gleiche, und es treten keine Leistungsverluste auf, die der Fahrer am Bremspedal spüren würde.

## Patentansprüche

1. Bremskraftverstärker für eine Fahrzeugbremsanlage mit
- einem zwei Kammern (14, 16) aufweisenden Vakuumverstärker 10), dessen Unterdruckkammer 16) bei bremskraftverstärkender Betätigung evakuiert ist, während in der Überdurckkammer (14) mittels eines Steuerventils (28) ein höherer Druck als in der Unterdruckkammer (16) einstellbar ist, wobei der höhere Druck zumindest dem äußeren Atmosphärendruck entspricht,
- einem in bezug auf den Vakuumverstärker 10) vor dem Steuerventil (28) angeordneten Ventil (12), das bei Erreichen von Atmoshphärendruck in der Überdruckkammer (14) diese mit einer Druckquelle (18) verbindet, die in der Überdruckkammer (14) einen Druck erzeugt, der größer ist als der Atmosphärendruck, wobei
- das Ventil (12) einen ersten Eingang 22) für Atmosphärendruck aufweisende Luft und einen zweiten Eingang (24) für Luft, deren Druck dem in der Überdruckkammer (14) entspricht, hat und die Druckdifferenz der an den ersten und zweiten Eingängen (22, 24) anstehenden Luft das Ventil (12) dann für eine Verbindung der Druckquelle (18) mit der Überdruckkammer (14) öffnet, wenn in der Überdruckkammer (14) Atmosphärendruck erreicht ist, dadurch gekennzeichnet, daß bei der Verbindung der Druckquelle (18) mit der Überdruckkammer 14) ein einen Zugang von der Druckquelle (18) zum Ventil (12) steuernder Ventilsitz (38) öffnet bevor ein eine Verbindung vom zweiten Eingang (24) zur Überdruckkammer (14) steuernder Ventilsitz (42) schließt, wobei ein eine Verbindung von der Druckquelle (18) zur Überdruckkammer (14) steuernder Ventilsitz (40) noch geschlossen ist.
